(19) **Europäisches Patentamt / European Patent Office / Office européen des brevets**

(11) **EP 4 593 114 A1**

(12) # EUROPEAN PATENT APPLICATION
published in accordance with Art. 153(4) EPC

(43) Date of publication:
**30.07.2025 Bulletin 2025/31**

(21) Application number: **23868428.6**

(22) Date of filing: **31.08.2023**

(51) International Patent Classification (IPC):
$H01M\ 4/505$ (2010.01)   $H01M\ 4/36$ (2006.01)
$H01M\ 4/525$ (2010.01)   $H01M\ 4/62$ (2006.01)
$H01M\ 4/131$ (2010.01)   $H01M\ 10/052$ (2010.01)
$H01M\ 4/587$ (2010.01)   $H01M\ 4/02$ (2006.01)

(52) Cooperative Patent Classification (CPC):
H01M 4/02; H01M 4/131; H01M 4/36; H01M 4/505;
H01M 4/525; H01M 4/587; H01M 4/62;
H01M 10/052; Y02E 60/10

(86) International application number:
**PCT/KR2023/012974**

(87) International publication number:
**WO 2024/063373 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.09.2022   KR 20220118062**
**19.06.2023   KR 20230077849**

(71) Applicant: **ECOPRO BM CO., LTD.**
**Cheongju-si, Chungcheongbuk-do 28116 (KR)**

(72) Inventors:
• **LIM, Ra Na**
**Cheongju-si, Chungcheongbuk-do 28116 (KR)**

• **JUNG, Hyun Su**
**Cheongju-si, Chungcheongbuk-do 28116 (KR)**
• **JEON, Se Hyeon**
**Cheongju-si, Chungcheongbuk-do 28116 (KR)**
• **KIM, Su Jin**
**Cheongju-si, Chungcheongbuk-do 28116 (KR)**
• **KIM, Sun Hwa**
**Cheongju-si, Chungcheongbuk-do 28116 (KR)**
• **KWAK, Hwan Wook**
**Cheongju-si, Chungcheongbuk-do 28116 (KR)**
• **JO, Min Su**
**Cheongju-si, Chungcheongbuk-do 28116 (KR)**

(74) Representative: **Vossius & Partner**
**Patentanwälte Rechtsanwälte mbB**
**Siebertstrasse 3**
**81675 München (DE)**

(54) ## POSITIVE ELECTRODE ACTIVE MATERIAL AND LITHIUM SECONDARY BATTERY INCLUDING SAME

(57)   The present invention relates to a positive electrode active material and a lithium secondary battery including the same, and more particularly, to a positive electrode active material including an overlithiated lithium manganese-based oxide, which is capable of preventing the electrochemical properties of a lithium secondary battery, including rate characteristics, from being degraded due to an excess of lithium and manganese in the lithium manganese-based oxide, and particularly preventing the lifetime degradation of a lithium secondary battery by inhibiting or mitigating the elution of a transition metal from the lithium manganese-based oxide, and a lithium secondary battery including the same.

FIG. 1

**Description**

[Technical Field]

The present invention relates to a positive electrode active material and a lithium secondary battery including the same, and more particularly, to a positive electrode active material including an overlithiated lithium manganese-based oxide, which is capable of preventing the electrochemical properties of a lithium secondary battery, including rate characteristics, from being degraded by an excess of lithium and manganese in the lithium manganese-based oxide, and particularly preventing the lifetime degradation of a lithium secondary battery by inhibiting or mitigating the elution of a transition metal from the lithium manganese-based oxide, and a lithium secondary battery including the same.

[Background Art]

Batteries store electrical power by using materials capable of electrochemical reactions at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials capable of reversible intercalation/deintercalation of lithium ions as positive electrode and negative electrode active materials, and is manufactured by charging an organic electrolyte or a polymer electrolyte between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or an oxide in which Ni, Co, Mn or Al is complexed.

Among the positive electrode active materials, $LiCoO_2$ is the most widely used due to its excellent lifetime characteristics and charge/discharge efficiency, but it has limitations in price competitiveness because cobalt, which is used as a raw material, is expensive due to resource constraints.

Lithium manganese oxides such as $LiMnO_2$ and $LiMn_2O_4$ have advantages of excellent thermal safety and low price, but also have problems of low capacity and poor high-temperature characteristics. In addition, a $LiNiO_2$-based positive electrode active material exhibits high discharge capacity battery characteristics, but it is difficult to synthesize the $LiNiO_2$-based positive electrode active material due to cation mixing between Li and transition metals, thereby causing significant problems in rate characteristics.

Additionally, depending on the intensification of the cation mixing, a large amount of Li by-products are generated. The Li by-products mostly include LiOH and $Li_2CO_3$, which may cause gelation during the preparation of a positive electrode paste or generate gas during repeated charge/discharge cycles after the manufacture of an electrode. In addition, residual $Li_2CO_3$ in the Li by-products increases cell swelling, which may cause the degradation of the lifetime characteristics.

Various candidate materials have been proposed to compensate for the shortcomings of these existing positive electrode active materials.

In an example, research is being conducted to use an overlithiated lithium manganese-based oxide, in which Mn among the transition metals is excessively included and the content of lithium is greater than the sum of the contents of the transition metals, as a positive electrode active material for lithium secondary batteries. Such an overlithiated lithium manganese-based oxide is also referred to as an overlithiated layered oxide (OLO).

Although the OLO theoretically has an advantage of exhibiting high capacity under a high voltage operating environment, electrical conductivity is, in fact, relatively low due to an excessive amount of Mn included in the oxide, and thus the rate characteristics of a lithium secondary battery using the OLO is low. As such, when the rate characteristics are low, there arises a problem in that the charge/discharge capacity and lifetime efficiency (cycle capacity retention) of the lithium secondary battery are degraded during cycling.

Although research on changing the composition of OLO has been conducted to solve the above-described problems, such an attempt has not yet reached a commercialization level.

[Disclosure]

[Technical Problem]

In the lithium secondary battery market, the growth of lithium secondary batteries for electric vehicles is driving the market, and accordingly, the demand for positive electrode active materials used in lithium secondary batteries is also continuously increasing.

For example, conventionally, lithium secondary batteries using lithium iron phosphate (LFP) have mainly been used to ensure safety, but recently, the use of nickel-based lithium composite oxides, which have a larger energy capacity per weight than LFP, is increasing.

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only unstable in supply but also excessively expensive compared to other raw materials, there is a need for a positive electrode active material with a new composition that can reduce the content of cobalt or exclude cobalt.

Considering these circumstances, an overlithiated lithium manganese-based oxide can meet the above-described expectations of the market, but still has limitations in terms of electrochemical properties or stability to replace a commercially available positive electrode active material such as a ternary lithium composite oxide with a nickel-cobalt-manganese (NCM) or nickel-cobalt-aluminum (NCA) composition.

For example, the present inventors have confirmed that lithium manganese-based oxides have a higher possibility of transition metals being eluted from the particle surface as charge/discharge cycles are repeated, compared to ternary lithium composite oxides. In particular, Mn, which is excessively included in lithium manganese-based oxides, has a high possibility of being eluted from the particle surface.

When a transition metal is eluted from the lithium manganese-based oxide, the eluted transition metal may react with an electrolyte on the surface of the lithium manganese-based oxide to form impurities. The impurities not only enhance the surface resistance of the lithium manganese-based oxide, but also cause degradation of the intercalation/deintercalation efficiency of lithium ions through the lithium manganese-based oxide.

In addition, the transition metal eluted from the lithium manganese-based oxide or the impurities formed by the reaction between the eluted transition metal and an electrolyte may migrate to a negative electrode using the electrolyte as a medium, and may be deposited on the surface of the negative electrode.

For example, side reactions with the electrolyte may occur on the surface of the lithium manganese-based oxide, or $Mn2^+$ included in excess in the lithium manganese-based oxide may be eluted into the electrolyte due to structural changes (such as changes in crystal structure, etc.) of the lithium manganese-based oxide. The $Mn^{2+}$ eluted into the electrolyte may migrate to the surface of the negative electrode using the electrolyte as a medium during formation or charging/discharging and react with various materials (such as electrons, an electrolyte, an electrode, by-products, etc.) in the battery, and as a result, impurities including $Mn^{2+}$, Mn metal or Mn-containing compounds (such as $MnCO_3$, MnO, $MnF_2$, etc.) are present on the surface of the negative electrode.

Transition metals or impurities deposited on the surface of the negative electrode may rapidly increase the resistance of the negative electrode, and this resistance abnormality is a typical cause of accelerating the lifetime degradation of lithium secondary batteries.

In particular, since a lithium secondary battery using the lithium manganese-based oxide as a positive electrode active material has a higher operating voltage than a lithium secondary battery using a commercially available ternary lithium composite oxide as a positive electrode active material, it is vulnerable to the above-described problem.

However, there is still no technology to solve the elution of transition metals from overlithiated lithium manganese-based oxides and the resulting problems.

As described above, existing overlithiated lithium manganese-based oxides have disadvantages in terms of electrochemical properties and/or stability when compared to other types of commercially available positive electrode active materials.

However, the present inventors have confirmed that when an additive capable of inhibiting or mitigating the elution of transition metals from the positive electrode active material including the lithium manganese-based oxide and/or the positive electrode manufactured using the positive electrode active material is mixed with the lithium manganese-based oxide and the resulting mixture is used as a positive electrode active material, the overlithiated lithium manganese-based oxide can also exhibit electrochemical properties and stability at a commercially viable level.

In addition, as described above, the present inventors have confirmed that when the additive and the lithium manganese-based oxide are mixed and used as a positive electrode active material, gas generation in the lithium secondary battery can be mitigated under high-voltage storage or operating conditions, compared to when the additive is applied on the surface of the lithium manganese-based oxide.

Accordingly, the present invention aims to provide a positive electrode active material capable of inhibiting or mitigating the elution of transition metals and/or resistance abnormality that cause lifetime degradation of the positive electrode active material by using a boron-containing compound as an additive capable of inhibiting or mitigating the elution of transition metals from the positive electrode active material including the lithium manganese-based oxide and/or the positive electrode manufactured using the positive electrode active material, wherein the lithium manganese-based oxide and the boron-containing compound are in a physically mixed state.

In addition, the present invention aims to provide a positive electrode including a positive electrode current collector and a positive electrode active material layer formed on the positive electrode current collector, wherein the positive electrode active material layer includes the positive electrode active material defined herein, a boron-containing compound, and a conductive material, thereby inhibiting or mitigating the elution of transition metals from the positive electrode.

Furthermore, the present invention aims to provide a lithium secondary battery capable of preventing the degradation of rate characteristics and capacity due to an excess of lithium and manganese present in existing OLOs by using the positive electrode defined herein, and in particular, achieving high stability by reducing side reactions between the positive electrode active material and the electrolyte under high-voltage storage or operating conditions.

[Technical Solution]

To solve the above-described technical problems, one aspect of the present invention provides a positive electrode active material including a lithium manganese-based oxide in which a phase belonging to a C2/m space group and a phase belonging to an R3-m space group are dissolved or complexed.

Generally, in a commercially available ternary lithium composite oxide with a nickel-cobalt-manganese (NCM) or nickel-cobalt-aluminum (NCA) composition, the phase belonging to the R3-m space group is present as a single phase, but in the overlithiated lithium manganese-based oxide defined herein, the phase belonging to the C2/m space group and the phase belonging to the R3-m space group are dissolved or complexed.

In an embodiment, the positive electrode active material may further include a boron-containing compound. The boron-containing compound is present in a physically mixed state with the lithium manganese-based oxide.

The lithium manganese-based oxide, which is one of the components constituting the positive electrode active material, may be present as a secondary particle in which a plurality of primary particles are aggregated. In this case, the boron-containing compound may be present independent of the secondary particle.

In addition, at least some of the plurality of lithium manganese-based oxides included in the positive electrode active material may be present in a state of physical contact with the boron-containing compound.

In the positive electrode active material, the boron-containing compound may be present in an amount of 0.1 wt% to 3.0 wt%. The boron-containing compound may include at least one selected from $B_2O_3$, $H_\alpha B_\beta O_\gamma$ ($0<\alpha<10$, $0<\beta<10$, and $0<\gamma<20$), and $Li_{\alpha'}B_{\beta'}O_{\gamma'}$, ($0<\alpha'<10$, $0<\beta'<10$, and $0<\gamma'<20$).

In an embodiment of the present invention, the lithium manganese-based oxide may be represented by Chemical Formula 1 below:

[Chemical Formula 1]     $Li(Li_aM1_xM2_y)O_{2-b}X_b$

(wherein

M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 and M1 are not the same,
X is a halogen capable of substituting at least a portion of the oxygen present in the lithium manganese-based oxide, and

$$0<a\leq0.7, \ 0\leq b\leq0.1, \ 0<x\leq1, \ 0\leq y<1, \ \text{and} \ 0<x+y\leq1).$$

In another embodiment of the present invention, the lithium manganese-based oxide may be represented by Chemical Formula 1-1 below:

[Chemical Formula 1-1]     $rLi_2MnO_{3-c}X'_c \cdot (1-r)Li_{a'}M1_{x'}M2_{y'}Q_{2-b'}X_{b'}$

(wherein

M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 and M1 are not the same,
X and X' are each independently a halogen capable of substituting at least a portion of the oxygen present in the lithium manganese-based oxide, and

$$0<r\leq0.7, \ 0\leq c\leq0.1, \ 0<a'\leq1, \ 0\leq b'\leq0.1, \ 0<x'\leq1, \ 0\leq y'<1, \ \text{and} \ 0<x'+y'\leq1).$$

According to another aspect of the present invention, there is provided a positive electrode including a positive electrode current collector and a positive electrode active material layer formed on the positive electrode current collector. The positive electrode active material layer includes the positive electrode active material defined herein, a boron-containing compound, and a conductive material.

The lithium manganese-based oxide and the boron-containing compound may be present in the positive electrode active material layer in a physically mixed state.

According to still another aspect of the present invention, there is provided a lithium secondary battery including the positive electrode defined herein, a negative electrode, a separator interposed between the positive electrode and the negative electrode, and an electrolyte.

[Advantageous Effects]

According to the present invention, compared to a commercially available ternary lithium composite oxide with a nickel-cobalt-manganese (NCM) or nickel-cobalt-aluminum (NCA) composition, it is possible to overcome the limitations of existing overlithiated lithium manganese-based oxides, which have various disadvantages in terms of electrochemical properties and/or stability.

Specifically, according to the present invention, by using the lithium manganese-based oxide and the boron-containing compound in a physically mixed state, it is possible to inhibit or mitigate the elution of transition metals from the positive electrode active material including the lithium manganese-based oxide and/or the positive electrode manufactured using the positive electrode active material.

It is possible to prevent the formation of impurities that hinder normal battery reactions in the lithium secondary battery due to the reaction between the eluted transition metal and the electrolyte by inhibiting or mitigating the elution of transition metals from the positive electrode active material including the lithium manganese-based oxide and/or the positive electrode manufactured using the positive electrode active material.

The transition metal eluted from the lithium manganese-based oxide and/or the impurities formed by the reaction between the eluted transition metal and the electrolyte may migrate to a negative electrode using the electrolyte as a medium, and the impurities may be deposited on the surface of the negative electrode and rapidly increase the negative electrode resistance. Accordingly, as described in the present invention, it is necessary to limit the unintended movement of the transition metal in the lithium secondary battery.

That is, according to the present invention, by ensuring the lithium manganese-based oxide and the boron-containing compound are present in a physically mixed state in the positive electrode active material or in the positive electrode, it is possible to inhibit or mitigate the elution of transition metals from the positive electrode active material including the lithium manganese-based oxide and/or the positive electrode manufactured using the positive electrode active material. Accordingly, it is possible to prevent the accelerated lifetime degradation of the lithium secondary battery due to the deposition of impurities that inhibit normal battery reactions on the positive electrode and/or the negative electrode.

In addition, as described above, the positive electrode active material in which the lithium manganese-based oxide and the boron-containing compound are simply physically mixed has the advantage of mitigating gas generation in the lithium secondary battery under high-voltage storage or operation conditions, compared to a positive electrode active material in which the lithium manganese-based oxide and the boron-containing compound form a composite.

Furthermore, the present invention makes it possible to prevent degradation of rate characteristics and capacity due to an excess of lithium and manganese present in existing OLOs by using the positive electrode defined herein, and in particular, to achieve high stability by reducing side reactions between the positive electrode active material and the electrolyte under high-voltage storage or operating conditions.

In addition to the above-described effects, specific effects of the present invention are described below while explaining specific details for the present invention above.

[Description of Drawings]

FIG. 1 is an SEM image of a positive electrode active material manufactured according to Example 1.
FIG. 2 is a cross-sectional SEM image of a positive electrode active material layer manufactured using a positive electrode active material manufactured according to Example 2.

[Modes of the Invention]

To better understand the present invention, certain terms are defined herein for convenience. Unless otherwise defined herein, scientific and technical terms used herein will have meanings commonly understood by those of ordinary skill in the art. In addition, unless the context clearly indicates otherwise, it should be understood that a term in the singular form also includes its plural form, and a term in the plural form also includes its singular form.

Hereinafter, a positive electrode active material including an overlithiated lithium manganese-based oxide and a lithium secondary battery including the positive electrode active material according to some embodiments of the present invention will be described in further detail.

Positive electrode active material

According to one aspect of the present invention, there is provided a positive electrode active material including a lithium manganese-based oxide in which a phase belonging to a C2/m space group and a phase belonging to an R3-m space group are dissolved or complexed.

The lithium manganese-based oxide includes at least lithium, nickel, and manganese. Since the lithium manganese-based oxide has a lithium content that is greater than the sum of the contents of the other transition metals in the lithium manganese-based oxide (generally, when the molar ratio (Li/metal molar ratio) of lithium to the total metal elements other than lithium in the lithium manganese-based oxide is greater than 1), it is referred to as an overlithiated layered oxide (OLO).

Generally, considering that the content of manganese among all metal elements except lithium is 20 mol% or less in a commercially available ternary lithium composite oxide with a nickel-cobalt-manganese (NCM) or nickel-cobalt-aluminum (NCA) composition, the lithium manganese-based oxide has a relatively high proportion of manganese (such as 50 mol% or more, and preferably, 55 mol% to 75 mol%) among all metal elements, compared to the commercially available ternary lithium composite oxide.

In addition, considering that the content of nickel among all metal elements except lithium is 60 mol% or more (in the case of a high-Ni type, 80 mol% or more) in a commercially available ternary lithium composite oxide with a nickel-cobalt-manganese (NCM) or nickel-cobalt-aluminum (NCA) composition, the lithium manganese-based oxide has a relatively low proportion of nickel (such as less than 50 mol%, and preferably, 25 mol% to 45 mol%) among all metal elements, compared to the commercially available ternary lithium composite oxide.

The Li/metal molar ratio measured from the lithium manganese-based oxide defined herein is higher than that of a ternary lithium composite oxide such as nickel-cobalt-manganese (NCM) or nickel-cobalt-aluminum (NCA). For example, the Li/metal molar ratio of a ternary lithium composite oxide such as nickel-cobalt-manganese (NCM) or nickel-cobalt-aluminum (NCA) is close to 1. On the other hand, the Li/metal molar ratio of the lithium manganese-based oxide defined herein is greater than 1, and preferably 1.1 to 1.6.

Despite the difference in composition, the lithium manganese-based oxide may serve as a composite metal oxide capable of intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an aggregate of a plurality of primary particles, the lithium manganese-based oxide may be referred to as a secondary particle.

The positive electrode active material may include at least one selected from the lithium manganese-based oxide present as a single particle and the lithium manganese-based oxide present as a secondary particle in which a plurality of primary particles are aggregated.

Primary particles constituting the lithium manganese-based oxide may have a rod shape, an oval shape, and/or an irregular shape. In addition, primary particles with various shapes are present in the same positive electrode active material unless specifically intended in the manufacturing process.

The primary particles constituting the lithium manganese-based oxide defined herein may have an average particle size of 0.05 μm to 5 μm, preferably, 0.05 μm to 1.0 μm, and more preferably, 0.25 μm to 0.75 μm. Here, the average particle size of the primary particles may be the average value of the length in the major axis direction and the length in the minor axis direction of the primary particles ([major axis length + minor axis length]/2).

When the lithium manganese-based oxide is present as a secondary particle in which a plurality of primary particles are aggregated, the average particle size of the secondary particle may be 0.5 μm to 15 μm. The average particle size of the secondary particle may vary depending on the number of the primary particles constituting the secondary particle.

Unless otherwise defined, the term "surface of the primary particle" used herein refers to the outermost surface of the primary particle exposed to the outside. Likewise, the term "surface of the secondary particle" used herein refers to the outermost surface of the secondary particle exposed to the outside. Here, the "surface of the secondary particle" formed by aggregation of a plurality of primary particles corresponds to the exposed surface of the primary particle present on the surface portion of the secondary particle.

In addition, unless otherwise defined, the term "surface portion of the particle" used herein refers to a region relatively close to the "outermost surface" of a particle, and the "central portion of the particle" refers to a region relatively close to the "center" of the particle compared to the "surface portion." Accordingly, the "surface portion of the primary particle" refers to a region relatively close to the "outermost surface" of the primary particle, and the "central portion of the primary particle" refers to a region relatively close to the "center" of the primary particle compared to the "surface portion." Likewise, the "surface portion of the secondary particle" refers to a region relatively close to the "outermost surface" of the secondary particle, and the "central portion of the secondary particle" refers to a region relatively close to the "center" of the secondary particle compared to the "surface portion."

Here, a region excluding the "surface portion of the particle" within any particle may be defined as the "central portion of a particle."

For example, when the radius of the primary particle is r, the region in which the distance from the surface of the primary particle is 0 to 0.5r may be defined as the surface portion of the primary particle, and the region in which the distance from the center of the primary particle is 0 to 0.5r may be defined as the central portion of the primary particle. When the radius of the primary particle is 0.5 $\mu$m, the surface portion of the primary particle may be defined as the region in which the distance from the surface of the primary particle is 0 to 0.25 $\mu$m, and the central portion of the primary particle may be defined as the region in which the distance from the center of the primary particle is 0 to 0.25 $\mu$m.

In addition, if necessary, when the radius of the primary particle is r, the region in which the distance from the surface of the primary particle is 0 to 0.1r or 0 to 0.2r may be defined as the surface portion of the primary particle, and the region in which the distance from the center of the primary particle is 0 to 0.2r or 0 to 0.5r may be defined as the central portion of the primary particle.

Likewise, when the radius of the secondary particle is r, the region in which the distance from the surface of the secondary particle is 0 to 0.5r may be defined as the surface portion of the secondary particle, and the region in which the distance from the center of the secondary particle is 0 to 0.5r may be defined as the central portion of the secondary particle. When the radius of the secondary particle is 2.0 $\mu$m, the surface portion of the secondary particle may be defined as the region in which the distance from the surface of the secondary particle is 0 to 1.0 $\mu$m, and the central portion of the secondary particle may be defined as the region in which the distance from the center of the primary particle is 0 to 1.0 $\mu$m.

In addition, if necessary, when the radius of the secondary particle is r, the region in which the distance from the surface of the secondary particle is 0 to 0.1r or 0 to 0.2r may be defined as the surface portion of the secondary particle, and the region in which the distance from the center of the secondary particle is 0 to 0.2r or 0 to 0.5r may be defined as the central portion of the secondary particle.

The lithium manganese-based oxide defined herein may be an overlithiated lithium manganese-based oxide represented by Chemical Formula 1 below.

$$[\text{Chemical Formula 1}] \quad Li(Li_aM1_xM2_y)O_{2-b}X_b$$

wherein M1 is at least one selected from Ni and Mn,

M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 and M1 are not the same,

X is a halogen capable of substituting at least a portion of the oxygen present in the lithium manganese-based oxide, and $0<a\leq0.7$, $0\leq b\leq0.1$, $0<x\leq1$, $0\leq y<1$, and $0<x+y\leq1$.

Halogens suitable for use as X can be found on the periodic table, and F, Cl, Br, and/or I, etc. may be used, with F being preferred.

In another embodiment, the lithium manganese-based oxide may be represented by Chemical Formula 1-1 below.

$$[\text{Chemical Formula 1-1}] \quad rLi_2MnO_{3-c}X'_c\cdot(1-r)Li_{a'}M1_{x'}M2_{y'}O_{2-b'}X_{b'}$$

wherein

M1 is at least one selected from Ni and Mn,

M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 and M1 are not the same,

X and X' are each independently a halogen capable of substituting at least a portion of the oxygen present in the lithium manganese-based oxide, and $0<r\leq0.7$, $0\leq c\leq0.1$, $0<a'\leq1$, $0\leq b'\leq0.1$, $0<x'\leq1$, $0\leq y'<1$, and $0<x'+y'\leq1$.

Halogens suitable for use as X and X' can be found on the periodic table, and F, Cl, Br, and/or I, etc. may be used, with F being preferred.

In Chemical Formulas 1 and 1-1, when M1 is Ni, M2 may include Mn, and when M1 is Mn, M2 may include Ni. In addition, when M1 is Ni and Mn, M2 may not be present, or when present, M2 may be an element other than Ni and Mn.

In other words, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Ni.

In other words, when M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si.

The lithium manganese-based oxide represented by Chemical Formula 1 or Chemical Formula 1-1 may optionally include cobalt. When the lithium manganese-based oxide includes cobalt, the mole fraction of cobalt relative to the number of moles of all metal elements in the lithium manganese-based oxide may be 20% or less, preferably, 15% or less, and more preferably, 10% or less. In another case, the lithium manganese-based oxide represented by Chemical Formula 1 may have a cobalt-free composition in which cobalt is not included.

The Li/metal molar ratio measured from the lithium manganese-based oxide represented by Chemical Formula 1 or Chemical Formula 1-1 may be greater than 1, preferably, 1.1 to 1.6. It is possible to form an overlithiated lithium manganese-based oxide when the Li/metal molar ratio measured from the lithium manganese-based oxide is greater than at least 1. In addition, in order for the lithium manganese-based oxide to appropriately form a solid solution in which a phase belonging to a C2/m space group and a phase belonging to an R3-m space group are dissolved or complexed, and at the same time, to exhibit high capacity under a high-voltage operating condition, the Li/metal molar ratio of the lithium manganese-based oxide is preferably 1.1 to 1.6.

In addition, to appropriately form a solid solution in which the phase belonging to the C2/m space group and the phase belonging to the R3-m space group are dissolved or complexed, the content of manganese among all metal elements except lithium present in the lithium manganese-based oxide represented by Chemical Formula 1 or Chemical Formula 1-1 is preferably 50 mol% or more.

In order for the lithium manganese-based oxide to have the characteristics of OLOs that exhibit high capacity under high-voltage operating conditions, the content of manganese among all metal elements except lithium present in the lithium manganese-based oxide is more preferably 50 mol% or more and less than 80 mol%, and even more preferably, 55 mol% to 75 mol%. When the content of manganese in the lithium manganese-based oxide exceeds 80 mol%, a phase transition may occur due to the migration of transition metals (particularly, manganese) in the lithium manganese-based oxide during formation and/or operation of a lithium secondary battery. This phase transition forms a spinel phase, and the spinel phase acting as an impurity in the lithium manganese-based oxide may cause a decrease in the charge/discharge capacity or a voltage decay during the cycling of the lithium secondary battery.

In order to appropriately form a solid solution in which the phase belonging to the C2/m space group and the phase belonging to the R3-m space group are dissolved or complexed, the content of nickel among all metal elements except lithium present in the lithium manganese-based oxide represented by Chemical Formula 1 or Chemical Formula 1-1 is preferably less than 50 mol%.

When the nickel content in the lithium manganese-based oxide is 50 mol% or more, it is difficult to sufficiently form the C2/m phase or the phase belonging to the C2/m space group and the phase belonging to the R3-m space group cannot sufficiently form a solid solution, which may cause phase separation during formation and/or operation of the lithium secondary battery.

Generally, in commercially available ternary lithium composite oxides with nickel-cobalt-manganese (NCM) or nickel-cobalt-aluminum (NCA) compositions, a phase belonging to the R3-m space group is present as a single phase.

On the other hand, the overlithiated lithium manganese-based oxide represented by Chemical Formula 1 or Chemical Formula 1-1 is present as a composite oxide in which an oxide of the phase belonging to the C2/m space group represented by $rLi_2MnO_3$ (hereinafter referred to as "C2/m phase") and an oxide of the phase belonging to the R3-m space group represented by $(1-r)Li_aM1_xM2_yO_{2-b}X_b$ (hereinafter referred to as "R3-m phase") are dissolved or complexed. For example, the lithium manganese-based oxide may be present in a state in which the C2/m-phase oxide and the R3-m-phase oxide form a solid solution.

In this case, a composite oxide in which a phase belonging to the C2/m space group and a phase belonging to the R3-m space group are simply physically and/or chemically combined or attached does not correspond to the solid solution defined therein.

For example, a composite oxide with the phase belonging to the C2/m space group whose surface is coated with a metal oxide with the phase belonging to the R3-m space group by mixing a metal oxide having the phase belonging to the C2/m space group and the metal oxide having the phase belonging to the R3-m space group does not correspond to the solid solution defined herein.

In the lithium manganese-based oxide represented by Chemical Formula 1-1, when r exceeds 0.7, the proportion of $Li_2MnO_3$, which is the C2/m-phase oxide in the lithium manganese-based oxide becomes excessively large, and as a result, the irreversible capacity and resistance of the positive electrode active material may increase, thereby lowering the discharge capacity. That is, in order to sufficiently activate the C2/m-phase oxide with relatively high resistance in the lithium manganese-based oxide and improve the surface kinetics, it is preferable that the R3-m-phase oxide is present in a predetermined proportion or more.

In an embodiment, the positive electrode active material may further include a boron-containing compound. The boron-containing compound is present in a physically mixed state with the lithium manganese-based oxide.

The state in which the lithium manganese-based oxide and the boron-containing compound are physically mixed means that the lithium manganese-based oxide and the boron-containing compound are not complexed, but they are present as independent particles.

Here, the state in which the lithium manganese-based oxide and the boron-containing compound are physically mixed should be distinguished from the state in which the surface of the lithium manganese-based oxide is coated with the boron-containing compound in the form of an oxide.

In other words, the state in which the lithium manganese-based oxide and the boron-containing compound are physically mixed means that when the lithium manganese-based oxide, which is one of the components constituting the positive electrode active material, is present as a secondary particle in which a plurality of primary particles are aggregated, the boron-containing compound is present independent of the primary particles and/or the secondary particle.

At this time, at least some of the plurality of lithium manganese-based oxides included in the positive electrode active material may be present in a state of physical contact with the boron-containing compound, but this physical contact state is different from the case where the surface of the lithium manganese-based oxide is inseparably coated with the boron-containing compound.

The boron-containing compound in the positive electrode active material may have an average particle size of 50 nm to 80 $\mu$m, preferably 50 nm to 60 $\mu$m, and more preferably 50 nm to 30 $\mu$m. At this time, the average particle size of the boron-containing compound may be determined using either the average value of the length in the major axis direction and the length in the minor axis direction of the boron-containing compound ([major axis length + minor axis length]/2) or the D50 value from the particle size distribution analysis of the boron-containing compound.

When the average particle size of the boron-containing compound is smaller than 50 nm, the dispersibility of the boron-containing compound in the positive electrode slurry, which includes the positive electrode active material in which the lithium manganese-based oxide and the boron-containing compound are physically mixed, may be low, making it difficult to uniformly control.

On the other hand, when the average particle size of the boron-containing compound is larger than 80 $\mu$m, or when the proportion of particles with a particle size of 80 $\mu$m or more in the boron-containing compound exceeds 50 wt%, it may be difficult to manufacture the positive electrode active material layer using the positive electrode active material in which the lithium manganese-based oxide and the boron-containing compound are physically mixed.

The boron-containing compound may be present in the positive electrode active material in an amount of 0.1 wt% to 3.0 wt%, preferably 0.1 wt% to 2.0 wt%, and more preferably 0.3 wt% to 1.5 wt%.

When the content of the boron-containing compound based on the total weight of the positive electrode active material is less than 0.1 wt%, it may be difficult to sufficiently inhibit or mitigate the elution of transition metals from the positive electrode active material including the lithium manganese-based oxide and/or the positive electrode manufactured using the positive electrode active material.

On the other hand, when the content of the boron-containing compound based on the total weight of the positive electrode active material is more than 3.0 wt%, the capacity of the lithium secondary battery using the positive electrode active material may be insufficient as the proportion of the lithium manganese-based oxide decreases based on the total weight of the positive electrode active material. In addition, the resistance of the positive electrode active material may become unnecessarily large as the content of the boron-containing compound in the positive electrode active material becomes relatively high.

The boron-containing compound may include at least one selected from $B_2O_3$, $H_\alpha B_\beta O_\gamma$ ($0<\alpha<10$, $0<\beta<10$, and $0<\gamma<20$), and $Li_{\alpha'} B_{\beta'} O_{\gamma'}$ ($0<\alpha'<10$, $0<\beta'<10$, and $0<y'<20$). Additionally, these boron-containing compounds may be interconverted in the lithium secondary battery using the positive electrode active material.

Lithium secondary battery

According to another aspect of the present invention, there is provided a positive electrode including a positive electrode current collector and a positive electrode active material layer formed on the positive electrode current collector.

The positive electrode active material layer may include the positive electrode active material including the lithium manganese-based oxide defined herein, a boron-containing compound, and a conductive material. When the positive electrode active material layer includes a boron-containing compound separately from the positive electrode active material, the positive electrode active material may not include a boron-containing compound.

In an embodiment, the boron-containing compound in the positive electrode active material layer is present in a physically mixed state with the lithium manganese-based oxide.

The state in which the lithium manganese-based oxide and the boron-containing compound are physically mixed means that the lithium manganese-based oxide and the boron-containing compound are not complexed, but they are present as independent particles.

Here, the state in which the lithium manganese-based oxide and the boron-containing compound are physically mixed should be distinguished from the state in which the surface of the lithium manganese-based oxide is coated with the boron-containing compound in the form of an oxide.

At this time, at least some of the plurality of lithium manganese-based oxides included in the positive electrode active material may be present in a state of physical contact with the boron-containing compound, but this physical contact state is different from the case where the surface of the lithium manganese-based oxide is inseparably coated with the boron-containing compound.

The boron-containing compound in the positive electrode active material layer may have an average particle size of 50 nm to 60 $\mu$m, preferably 50 nm to 30 $\mu$m, and more preferably 50 nm to 15 $\mu$m. At this time, the average particle size of the boron-containing compound may be determined using either the average value of the length in the major axis direction and the length in the minor axis direction of the boron-containing compound ([major axis length + minor axis length]/2) or the D50 value from the particle size distribution analysis of the boron-containing compound.

When the average particle size of the boron-containing compound in the positive electrode active material layer is smaller than 50 nm, the boron-containing compound is less likely to be uniformly dispersed in the positive electrode active material layer.

On the other hand, when the average particle size of the boron-containing compound in the positive electrode active material layer is larger than 60 $\mu$m, or when the proportion of particles with a particle size of 60 $\mu$m or more in the boron-containing compound exceeds 50 wt%, the boron-containing compound may not be easily dissolved in the electrolyte. During the storage and/or operation of the lithium secondary battery, the boron-containing compound in the positive electrode active material or the positive electrode active material layer may be dissolved in the electrolyte, and the boron-containing compound dissolved in the electrolyte may form a physical barrier layer on the surface of the positive electrode, thereby inhibiting or mitigating the elution of transition metals from the positive electrode.

In addition, the boron-containing compound dissolved in the electrolyte may migrate to the negative electrode and form a physical barrier layer on the surface of the negative electrode. Thus, the physical barrier layer formed on the surface of the negative electrode may prevent the deposition of transition metals eluted from the lithium manganese-based oxide and/or impurities resulting from the eluted transition metals on the surface of the negative electrode.

The physical barrier layer may include a boron-containing oxide represented by Chemical Formula 2 below.

[Chemical Formula 2] $\qquad$ $Li_cB_dM3_eO_f$

wherein M3 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and $0 \le c \le 8$, $0 < d \le 8$, $0 \le e \le 8$, and $2 \le f \le 13$.

When the boron-containing oxide represented by Chemical Formula 2 is a borate-based compound or a lithium borate (LBO)-based compound, non-limiting examples of the boron-containing oxide include $B_2O_3$, $Li_2O-B_2O_3$, $Li_3BO_3$, $Li_2B_4O_7$, $Li_2B_2O_7$, $Li_2B_8O_{13}$, etc. In addition, the boron-containing oxide may have a composition in which the above-described borate-based compound or lithium borate-based compound is optionally doped with a different element, M3.

In the positive electrode active material layer, the boron-containing compound may be present in an amount of 0.09 wt% to 3.0 wt%, preferably 0.09 wt% to 2.0 wt%.

When the content of the boron-containing compound based on the total weight of solids in the positive electrode active material layer is less than 0.09 wt%, it may be difficult to sufficiently inhibit or mitigate the elution of transition metals from the positive electrode. In addition, as the amount of the boron-containing compound dissolved in the electrolyte decreases, it may be difficult to sufficiently form a physical barrier layer on the surface of the positive electrode and/or the negative electrode during the storage and/or operation of the lithium secondary battery.

On the other hand, when the content of the boron-containing compound based on the total weight of the positive electrode active material is more than 3.0 wt%, the capacity of the lithium secondary battery using the positive electrode active material may be insufficient as the proportion of the lithium manganese-based oxide decreases based on the total weight of the positive electrode active material. In addition, the resistance of the positive electrode active material may become unnecessarily large as the content of the boron-containing compound in the positive electrode active material becomes relatively high.

The boron-containing compound may include at least one selected from $B_2O_3$, $H_\alpha B_\beta O_\gamma$ ($0<\alpha<10$, $0<\beta<10$, and $0<\gamma<20$), and $Li_{\alpha'}B_{\beta'}O_{\gamma'}$ ($0<\alpha'<10$, $0<\beta'<10$, and $0<\gamma'<20$). Additionally, these boron-containing compounds may be interconverted in the lithium secondary battery using the positive electrode active material.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 μm to 500 μm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material is included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Since the positive electrode is the same as described above, detailed description of the positive electrode will be omitted for convenience, and other components which have not been described above will be described in detail below.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 $\mu$m to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of a high melting point glass fiber or a polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic $C_2$ to $C_{20}$ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery, and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_3SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include $Li_2S$-$P_2S_5$, $Li_2S$-$P_2S_5$-LiX (where X is a halogen element such as I or Cl), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are integers, and Z is Ge, Zn, or Ga), $Li_2S$-$GeS_2$, $Li_2S$-$SiS_2$-$Li_3PO_4$, and $Li_2S$-$SiS_2$-$Li_pMO_q$ (where p and q are integers, and M is P, Si, Ge, B, Al, Ga, or In).

The solid electrolyte, preferably, a sulfide-based solid electrolyte, may be amorphous, crystalline, or a state in which an amorphous phase and crystalline phase are mixed.

Materials for the oxide-based solid electrolyte include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$(LiPON), and $Li_{2+2x}Zn_{1-x}GeO_4$ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to still another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

Preparation Example 1. Preparation of positive electrode active material

Example 1

(a) Precursor preparation

An aqueous solution in which $NiSO_4 \cdot 6H_2O$ and $MnSO_4 \cdot H_2O$ were mixed at a molar ratio of 40:60, NaOH, and $NH_4OH$ were added into a reactor while stirring. The temperature inside the reactor was maintained at 45 °C, and the precursor synthesis reaction was carried out while inputting $N_2$ gas into the reactor. After completing the reaction, washing and dehydration were performed to obtain a $Ni_{0.4}Mn_{0.6}(OH)_2$ precursor with an average particle size of 3.5 $\mu$m.

(b) Precursor coating

A $NiSO_4 \cdot 6H_2O$ aqueous solution, NaOH, and $NH_4OH$ were added to the reactor in which the precursor obtained in step (a) was being stirred. At this time, $NiSO_4 \cdot 6H_2O$ was weighed to be 5 mol% and added. After completing the reaction, washing and dehydration were performed, and then drying was performed at 150 °C for 14 hours to obtain a coated precursor.

(c) First heat treatment

The furnace with an air atmosphere was heated to 550 °C at a rate of 2 °C/min, and then the precursor obtained in step (b) was heat-treated for 5 hours while maintaining 550 °C, followed by furnace cooling to obtain an oxide-state precursor.

(d) Second heat treatment

The oxide-state precursor obtained in step (c) and LiOH, a lithium raw material (Li/(metals except Li) molar ratio = 1.22), were mixed to prepare a mixture.

Subsequently, the mixture was heated in a furnace with an $O_2$ atmosphere at a rate of 2 °C/min to 900 °C, heat-treated for 8 hours while maintaining 900 °C, and then furnace-cooled to obtain an overlithiated lithium manganese-based oxide.

As a result of TEM/EDS analysis of the lithium manganese-based oxide, it was confirmed that a gradient was formed in which the concentration of Ni increased from the center to the surface and the concentration of Mn decreased, due to the precursor coating using Ni in step (b).

(e) Mixing with boron-containing compound

The lithium manganese-based oxide obtained in step (d) was mixed with $B_2O_3$ with an average particle size of 40 $\mu$m as a boron-containing compound to obtain a final product in which the lithium manganese-based oxide and the boron-containing compound were physically mixed. At this time, the boron-containing compound was mixed to be 0.3 wt% based on the total weight of the final product.

Example 2

A positive electrode active material was prepared in the same manner as in Example 1, except that the boron-containing compound was mixed to be 0.7 wt% based on the total weight of the final product.

Example 3

A positive electrode active material was prepared in the same manner as in Example 1, except that the boron-containing compound was mixed to be 1.5 wt% based on the total weight of the final product.

Comparative Example 1

A positive electrode active material was prepared in the same manner as in Example 1, except that step (e) was not performed.

Reference Example 1

A positive electrode active material was prepared in the same manner as in Example 1, except that $B_2O_3$ with an average particle size of 100 $\mu$m was mixed to be 0.7 wt% based on the total weight of the final product in step (e).

Reference Example 2

A positive electrode active material was prepared in the same manner as in Example 1, except that the boron-containing compound was mixed to be 0.05 wt% based on the total weight of the final product.

Preparation Example 2. Manufacture of lithium secondary battery (half-cell)

A positive electrode slurry was prepared by dispersing 90 wt% of each positive electrode active material prepared according to Examples 1 to 3, Comparative Example 1, and Reference Examples 1 and 2 described in Preparation Example 1, 4.5 wt% of carbon black, and 5.5 wt% of PVDF binder in N-methyl-2-pyrrolidone (NMP).
The positive electrode slurry was uniformly applied onto a 15 $\mu$m-thick aluminum thin film and vacuum dried at 135 °C to manufacture a positive electrode for a lithium secondary battery in which a positive electrode active material layer was formed.
A half-cell was manufactured using a lithium foil as a counter electrode to the positive electrode, a porous polyethylene membrane (Celgard 2300, thickness: 25 $\mu$m) as a separator, and an electrolyte in which $LiPF_6$ was dissolved at a concentration of 1.15 M in a mixed solvent of ethylene carbonate, dimethyl carbonate, and ethyl methyl carbonate at a volume ratio of 2:4:4.
At this time, when using the positive electrode active material prepared according to Reference Example 1, scratches occurred on the surface of the positive electrode active material layer due to the excessively large average particle size of $B_2O_3$, making it impossible to form a normal positive electrode active material layer.

Preparation Example 3. Manufacture of lithium secondary battery (half-cell)

A positive electrode slurry was prepared by dispersing 90 wt% of the positive electrode active material prepared according to Comparative Example 1 described in Preparation Example 1, 4.5 wt% of carbon black, 5.5 wt% of PVDF binder, and $B_2O_3$ with an average particle size of 40 $\mu$m as a boron-containing compound in N-methyl-2-pyrrolidone (NMP). The boron-containing compound was mixed to be 0.6 wt% based on the total weight of solids in the positive electrode slurry.
The positive electrode slurry was uniformly applied onto a 15 $\mu$m-thick aluminum thin film and vacuum dried at 135 °C to manufacture a positive electrode for a lithium secondary battery in which a positive electrode active material layer was formed.
A half-cell was manufactured using a lithium foil as a counter electrode to the positive electrode, a porous polyethylene membrane (Celgard 2300, thickness: 25 $\mu$m) as a separator, and an electrolyte in which $LiPF_6$ was dissolved at a concentration of 1.15 M in a mixed solvent of ethylene carbonate, dimethyl carbonate, and ethyl methyl carbonate at a volume ratio of 2:4:4.

Preparation Example 4. Manufacture of lithium secondary battery (full-cell)

A positive electrode slurry was prepared by dispersing 90 wt% of each positive electrode active material prepared according to Examples 1 to 3, Comparative Example 1, and Reference Examples 1 and 2 described in Preparation Example 1, 4.5 wt% of carbon black, and 5.5 wt% of PVDF binder in N-methyl-2-pyrrolidone (NMP).
The positive electrode slurry was uniformly applied onto a 15 $\mu$m-thick aluminum thin film and vacuum dried at 135 °C to manufacture a positive electrode for a lithium secondary battery in which a positive electrode active material layer was formed.
A full-cell was manufactured using a graphite electrode as a counter electrode to the positive electrode, a porous polyethylene membrane (Celgard 2300, thickness: 25 $\mu$m) as a separator, and an electrolyte in which $LiPF_6$ was dissolved at a concentration of 1.15 M in a mixed solvent of ethylene carbonate, dimethyl carbonate, and ethyl methyl carbonate at a volume ratio of 2:4:4.

At this time, when using the positive electrode active material prepared according to Reference Example 1, scratches occurred on the surface of the positive electrode active material layer due to the excessively large average particle size of $B_2O_3$, making it impossible to form a normal positive electrode active material layer.

Preparation Example 5. Manufacture of lithium secondary battery (full-cell)

A positive electrode slurry was prepared by dispersing 90 wt% of the positive electrode active material prepared according to Comparative Example 1 described in Preparation Example 1, 4.5 wt% of carbon black, 5.5 wt% of PVDF binder, and $B_2O_3$ with an average particle size of 40 $\mu$m as a boron-containing compound in N-methyl-2-pyrrolidone (NMP). The boron-containing compound was mixed to be 0.6 wt% based on the total weight of solids in the positive electrode slurry.

The positive electrode slurry was uniformly applied onto a 15 $\mu$m-thick aluminum thin film and vacuum dried at 135 °C to manufacture a positive electrode for a lithium secondary battery in which a positive electrode active material layer was formed.

A full-cell was manufactured using a graphite electrode as a counter electrode to the positive electrode, a porous polyethylene membrane (Celgard 2300, thickness: 25 $\mu$m) as a separator, and an electrolyte in which $LiPF_6$ was dissolved at a concentration of 1.15 M in a mixed solvent of ethylene carbonate, dimethyl carbonate, and ethyl methyl carbonate at a volume ratio of 2:4:4.

Experimental Example 1. SEM analysis of positive electrode active material

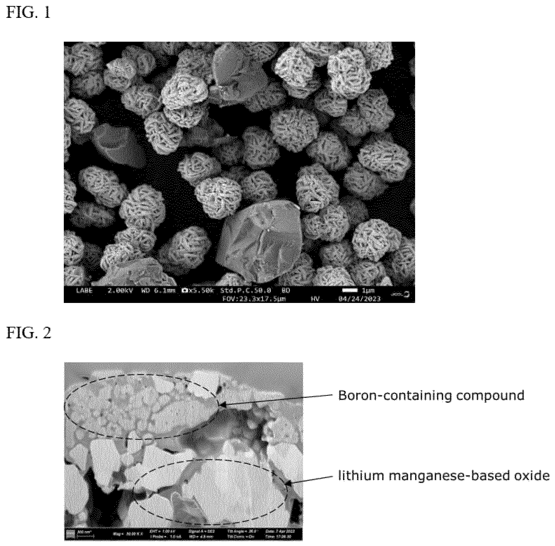

FIG. 1 is an SEM image of the positive electrode active material prepared according to Example 1.

Referring to FIG. 1, it can be confirmed that the lithium manganese-based oxide in the form of secondary particles and the boron-containing compound coexist in the positive electrode active material. In other words, it can be confirmed that the lithium manganese-based oxide in the positive electrode active material is present as a secondary particle in which a plurality of primary particles are aggregated, and the boron-containing compound is present independent of the secondary particle.

In addition, it can be seen that at least some of the plurality of lithium manganese-based oxides included in the positive electrode active material are present in a state of physical contact with the boron-containing compound.

Experimental Example 2. SEM analysis of positive electrode cross-section

The distribution of lithium manganese-based oxide and boron-containing compound in the positive electrode active material layer was analyzed through cross-sectional SEM image analysis of the positive electrode active material layer prepared using the positive electrode active material prepared according to Example 2 in Preparation Example 2. The positive electrode active material layer was analyzed in a state before being assembled into a half-cell after manufacturing the positive electrode by the method described in Preparation Example 2. The analysis results are shown in FIG. 2.

Referring to FIG. 2, it can be seen that boron is distributed throughout the positive electrode active material layer, and that the particle size of the boron-containing compound is reduced to a range of tens to hundreds of nm compared to the boron-containing compound confirmed in FIG. 1.

This result is presumed to be due to the boron-containing compound being partially dissolved by the solvent during the positive electrode manufacturing process. Accordingly, the boron-containing compound may be present in a completely dispersed state in the positive electrode active material layer. In addition, it can be confirmed from the results in FIG. 2 that the boron-containing compound partially dissolved by the solvent during the positive electrode manufacturing process may be converted into the form of a physical barrier layer on the surface of the positive electrode active material layer.

Experimental Example 3. Dissolution analysis of boron-containing compound

The positive electrode manufactured using the positive electrode active material prepared according to Example 2 in Preparation Example 2 and the positive electrode manufactured in Preparation Example 3 were each stored in an electrolyte at 60 °C for 3 days, and then recovered to measure the boron content in the positive electrode through ICP analysis. The measurement results are shown in Table 1 below.

[Table 1]

| Classification | Boron content before storage (ppm) | Boron content after storage (ppm) |
|---|---|---|
| Preparation Example 2 (Example 2) | 1,646 | 61 |
| Preparation Example 3 | 1,740 | 24 |

Referring to the results in Table 1, it can be confirmed that when the positive electrode manufactured using the positive electrode active material prepared according to Example 2 in Preparation Example 2 and the positive electrode manufactured in Preparation Example 3 are stored in a relatively high-temperature electrolyte, the content of the boron-containing compound in the positive electrode decreases as the boron-containing compound in the positive electrode is dissolved.

Thus, the boron-containing compound in the positive electrode can be dissolved into the electrolyte, and the boron-containing compound dissolved in the electrolyte can be converted into the form of a physical barrier layer on the surface of the positive electrode active material layer and/or the negative electrode active material layer.

Experimental Example 4. Evaluation of electrochemical properties of lithium secondary battery (half-cell)

For the lithium secondary batteries (half-cells) manufactured in Preparation Examples 2 and 3, charge/discharge experiments were conducted using an electrochemical analyzer (Toscat-3100 from TOYO SYSTEM CO., LTD.) at 25 °C, a voltage range of 2.0 V to 4.6 V, and discharge rates of 0.1 C, 1.0 C, and 2.0 C to measure the initial charge capacity, initial discharge capacity, initial reversible efficiency, and rate characteristics (discharge capacity ratio; rate capability (C-rate)).

The measurement results are shown in Table 2 below.

[Table 2]

| Classification | | Initial charge capacity (0.1 C-rate) | Initial discharge capacity (0.1 C-rate) | Initial efficiency | Discharge capacity by C-rate (0.2 C) | Discharge capacity by C-rate (1.0 C) | Discharge capacity by C-rate (2.0 C) |
|---|---|---|---|---|---|---|---|
| | | mAh/g | mAh/g | % | mAh/g | mAh/g | mAh/g |
| Preparation Example 2 | Example 1 | 245 | 218 | 89.0 | 211 | 186 | 171 |
| | Example 2 | 246 | 219 | 89.0 | 211 | 187 | 172 |
| | Example 3 | 244 | 218 | 89.3 | 210 | 184 | 169 |
| | Comparative Example 1 | 244 | 216 | 88.5 | 207 | 181 | 166 |
| | Reference Example 1 | - | - | - | - | - | - |
| | Reference Example 2 | 244 | 216 | 88.5 | 209 | 182 | 167 |
| Preparation Example 3 | | 245 | 218 | 89.0 | 210 | 187 | 171 |

Referring to the evaluation results of the half-cells in Table 2, it can be confirmed that even when the boron-containing compound is physically mixed in the positive electrode active material or the positive electrode active material layer, the initial charge capacity, initial discharge capacity, initial reversible efficiency, and rate characteristics do not decrease, and in particular, some indicators (such as initial efficiency and discharge capacity) are somewhat improved.

Experimental Example 5. Evaluation of electrochemical properties of lithium secondary battery (full-cell)

For the lithium secondary batteries (full-cells) manufactured in Preparation Examples 4 and 5, after completing a 6-cycle formation process under the conditions of 25 °C, a voltage range of 2.0 V to 4.6 V, and 0.2 C/0.2 C using an electrochemical analyzer (Toscat-3100 from TOYO SYSTEM CO., LTD.), 500 charge/discharge cycles were performed under the conditions of 25 °C, a voltage range of 2.0 V to 4.6 V, and 1 C/1 C. The initial (1st cycle) discharge capacity and the ratio of the discharge capacity at the 500th cycle to the initial discharge capacity (cycle capacity retention) were measured.

The measurement results are shown in Table 3 below.

[Table 3]

| Classification | | 500$^{th}$ cycle capacity retention (%) |
|---|---|---|
| Preparation Example 4 | Example 1 | 81.7 |
| | Example 2 | 84.0 |
| | Example 3 | 86.7 |
| | Comparative Example 1 | 9.5 |
| | Reference Example 1 | - |
| | Reference Example 2 | 41.2 |
| Preparation Example 5 | | 80.5 |

Referring to the evaluation results of the full-cells in Table 3, unlike the evaluation results of the half-cells in Table 2, it can be confirmed that the cycle capacity retention of the full-cells using the positive electrode active materials according to Examples 1 to 3 is significantly higher than that of the full-cell using the positive electrode active material according to Comparative Example 1. In the case of the full-cell using the positive electrode active material according to Comparative Example 1, it is presumed that a resistance abnormality occurred in the negative electrode due to the elution of transition metals from the lithium manganese-based oxide, thereby accelerating lifetime degradation.

Meanwhile, although Reference Example 2 shows a higher cycle capacity retention than the full-cell using the positive electrode active material according to Comparative Example 1, the content of the boron-containing compound physically mixed with the lithium manganese-based oxide was somewhat small, and thus it is presumed that lifetime degradation occurred more than in the full-cells using the positive electrode active materials according to Examples 1 to 3.

In addition, it can be confirmed that the full-cell according to Preparation Example 5, which used the positive electrode active material according to Comparative Example 1 but physically mixed the boron-containing compound during the positive electrode manufacturing process, exhibits a cycle capacity retention similar to that of Example 1.

Experimental Example 6. Analysis of transition metal elution

For the lithium secondary batteries (full-cells) manufactured using the positive electrode active materials prepared according to Example 2 and Comparative Example 1 in Preparation Example 4 and the lithium secondary battery (full-cell) manufactured in Preparation Example 5, a 6-cycle formation process was completed under the conditions of 25 °C, a voltage range of 2.0 V to 4.6 V, and 0.2 C/0.2 C using an electrochemical analyzer (Toscat-3100 from TOYO SYSTEM CO., LTD.), and then the full cells were stabilized by 2 charge/discharge cycles under the conditions of 25 °C, a voltage range of 2.0 V to 4.6 V, and 0.05 C/0.05 C. Subsequently, the full-cells were disassembled, the negative electrodes were washed with a diethyl carbonate solvent and recovered after vacuum drying at 60 °C.

Only the negative electrode active material was separated from the Cu foil (current collector) of the recovered negative electrode, and the separated negative electrode active material was subjected to ICP analysis to measure the content of Ni, Mn, and B included in the negative electrode active material.

In addition, for the lithium secondary batteries (full-cells) manufactured using the positive electrode active materials prepared according to Example 2 and Comparative Example 1 in Preparation Example 4 and the lithium secondary battery (full-cell) manufactured in Preparation Example 5, after completing a 6-cycle formation process under the conditions of 25 °C, a voltage range of 2.0 V to 4.6 V, and 0.2 C/0.2 C using an electrochemical analyzer (Toscat-3100 from TOYO SYSTEM CO., LTD.), 500 charge/discharge cycles were performed under the conditions of 25 °C, a voltage range of 2.0 V to 4.6 V, and 1 C/1 C. Subsequently, each full-cell was stabilized by 2 charge/discharge cycles under the conditions of 25 °C, a voltage range of 2.0 V to 4.6 V, and 0.05 C/0.05 C. Subsequently, the full-cells were disassembled, the negative electrodes were washed with a diethyl carbonate solvent and recovered after vacuum drying at 60 °C.

Only the negative electrode active material was separated from the Cu foil (current collector) of the recovered negative electrode, and the separated negative electrode active material was subjected to ICP analysis to measure the content of Ni, Mn, and B included in the negative electrode active material.

The measurement results are shown in Table 4 below.

[Table 4]

| Classification | After formation | | | After 500 charge/discharge cycles | | |
|---|---|---|---|---|---|---|
| | Ni (ppm) | Mn (ppm) | B (ppm) | Ni (ppm) | Mn (ppm) | B (ppm) |
| Preparation Example 4 (Example 2) | 110 | 61 | 43 | 137 | 284 | 90 |
| Preparation Example 4 (Comparative Example 1) | 111 | 144 | 0 | 360 | 749 | 0 |
| Preparation Example 5 | 107 | 94 | 17 | 268 | 589 | 30 |

Referring to the results in Table 4, as expected in Experimental Example 5, it can be confirmed that the rapid lifetime degradation of the full-cell using the positive electrode active material according to Comparative Example 1 is due to the relatively large amount of transition metals deposited on the negative electrode active material as charge/discharge cycles are repeated.

The embodiments of the present invention have been described, but it will be understood by those of ordinary skill in the art that the present invention may be changed and modified in various ways through addition, modification, or deletion of components without departing from the spirit of the present invention described in the claims.

**Claims**

1.   A positive electrode active material comprising:

a lithium manganese-based oxide in which a phase belonging to a C2/m space group and a phase belonging to an R3-m space group are dissolved or complexed; and
a boron-containing compound physically mixed with the lithium manganese-based oxide.

2.   The positive electrode active material of claim 1, wherein the lithium manganese-based oxide is present as a secondary particle in which a plurality of primary particles are aggregated, and the boron-containing compound is present independent of the secondary particle.

3.   The positive electrode active material of claim 1, wherein the average particle size of the lithium manganese-based oxide is 0.5 $\mu$m to 15 $\mu$m.

4.   The positive electrode active material of claim 1, wherein the boron-containing compound has an average particle size of 50 nm to 80 $\mu$m.

5.   The positive electrode active material of claim 1, wherein at least some of the plurality of lithium manganese-based oxides included in the positive electrode active material are present in a state of physical contact with the boron-containing compound.

6.   The positive electrode active material of claim 1, wherein the boron-containing compound is present in an amount of 0.1 wt% to 3.0 wt% based on the total weight of the positive electrode active material.

7.   The positive electrode active material of claim 1, wherein the boron-containing compound includes at least one selected from $B_2O_3$, $H_\alpha B_\beta O_\gamma$ (0<$\alpha$<10, 0<$\beta$<10, and 0<$\gamma$<20) and $Li_{\alpha'}B_{\beta'}O_{\gamma'}$ (0<$\alpha'$<10, 0<$\beta'$<10, and 0<y'<20).

8.   The positive electrode active material of claim 1, wherein the lithium manganese-based oxide is represented by Chemical Formula 1 below:

[Chemical Formula 1]          $Li(Li_a M1_x M2_y)O_{2-b}X_b$

(wherein

M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 and M1 are not the same,
X is a halogen capable of substituting at least a portion of the oxygen present in the lithium manganese-based oxide, and

$$0<a\leq0.7,\ 0\leq b\leq0.1,\ 0<x\leq1,\ 0\leq y<1,\ \text{and}\ 0<x+y\leq1).$$

9. The positive electrode active material of claim 1, wherein the lithium manganese-based oxide is represented by Chemical Formula 1-1 below:

[Chemical Formula 1-1]     $rLi_2MnO_{3-c}X'_c\cdot(1-r)Li_{a'}M1_{x'}M2_{y'}O_{2-b'}X_{b'}$

(wherein

M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 and M1 are not the same,
X and X' are each independently a halogen capable of substituting at least a portion of the oxygen present in the lithium manganese-based oxide, and

$$0<r\leq0.7,\ 0\leq c\leq0.1,\ 0<a'\leq1,\ 0\leq b'\leq0.1,\ 0<x'\leq1,\ 0\leq y'<1,\ \text{and}\ 0<x'+y'\leq1).$$

10. A positive electrode comprising:

a positive electrode current collector; and
a positive electrode active material layer formed on the positive electrode current collector,
wherein the positive electrode active material layer includes a positive electrode active material, a boron-containing compound, and a conductive material.

11. The positive electrode of claim 10, wherein the positive electrode active material and the boron-containing compound are present in the positive electrode active material layer in a physically mixed state.

12. The positive electrode of claim 10, wherein the positive electrode active material is a lithium manganese-based oxide in which a phase belonging to the C2/m space group and a phase belonging to the R3-m space group are dissolved or complexed.

13. The positive electrode of claim 10, wherein the boron-containing compound has an average particle size of 50 nm to 60 $\mu$m.

14. The positive electrode of claim 10, wherein the boron-containing compound is present in an amount of 0.09 wt% to 3.0 wt% based on the total weight of solids in the positive electrode active material layer.

15. The positive electrode of claim 10, wherein the boron-containing compound includes at least one selected from $B_2O_3$, $H_\alpha B_\beta O_\gamma$ (0<$\alpha$<10, 0<$\beta$<10, and 0<$\gamma$<20), and $Li_{\alpha'}B_{\beta'}O_{\gamma'}$ (0<$\alpha'$<10, 0<$\beta'$<10, and 0<$\gamma'$<20).

16. A lithium secondary battery comprising:

the positive electrode according to any one of claims 10 to 15;
a negative electrode;
a separator interposed between the positive electrode and the negative electrode; and an electrolyte.

FIG. 1

FIG. 2

Boron-containing compound

lithium manganese-based oxide

## INTERNATIONAL SEARCH REPORT

| | International application No. |
|---|---|
| | **PCT/KR2023/012974** |

### A. CLASSIFICATION OF SUBJECT MATTER

**H01M 4/505**(2010.01)i; **H01M 4/36**(2006.01)i; **H01M 4/525**(2010.01)i; **H01M 4/62**(2006.01)i; **H01M 4/131**(2010.01)i; **H01M 10/052**(2010.01)i; **H01M 4/587**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/505(2010.01); H01M 10/052(2010.01); H01M 10/0525(2010.01); H01M 4/13(2010.01); H01M 4/131(2010.01); H01M 4/1391(2010.01); H01M 4/36(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 망간계 산화물(lithium manganese oxide), 보론(boron), 양극 활물질(cathode active material), C2/m, R3-m, 전지(battery)

### C. DOCUMENTS CONSIDERED TO BE RELEVANT

| Category* | Citation of document, with indication, where appropriate, of the relevant passages | Relevant to claim No. |
|---|---|---|
| X | KR 10-2013-0086805 A (SAMSUNG SDI CO., LTD.) 05 August 2013 (2013-08-05)<br>See claims 1, 3, 5 and 12; and paragraphs [0004]-[0005], [0030], [0071] and [0087]-[0089]. | 10-11,13-16 |
| Y | | 1-9,12 |
| Y | KR 10-2022-0079430 A (ECOPRO BM CO., LTD.) 13 June 2022 (2022-06-13)<br>See claims 1 and 9; and paragraphs [0068]-[0069], [0071] and [0076]. | 1-9,12 |
| A | KR 10-2017-0113366 A (LG CHEM, LTD.) 12 October 2017 (2017-10-12)<br>See entire document. | 1-16 |
| A | KR 10-2020-0014299 A (SUMITOMO METAL MINING CO., LTD.) 10 February 2020 (2020-02-10)<br>See entire document. | 1-16 |
| A | JP 2020-136114 A (TOYOTA MOTOR CORP. et al.) 31 August 2020 (2020-08-31)<br>See entire document. | 1-16 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2023** | **05 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# INTERNATIONAL SEARCH REPORT
## Information on patent family members

International application No.

**PCT/KR2023/012974**

| Patent document cited in search report | | | Publication date (day/month/year) | Patent family member(s) | | | Publication date (day/month/year) |
|---|---|---|---|---|---|---|---|
| KR | 10-2013-0086805 | A | 05 August 2013 | CN | 103227329 | A | 31 July 2013 |
| | | | | EP | 2621001 | A1 | 31 July 2013 |
| | | | | JP | 2013-157318 | A | 15 August 2013 |
| | | | | US | 2013-0196227 | A1 | 01 August 2013 |
| KR | 10-2022-0079430 | A | 13 June 2022 | KR | 10-2022-0079404 | A | 13 June 2022 |
| | | | | KR | 10-2022-0079408 | A | 13 June 2022 |
| | | | | KR | 10-2022-0079409 | A | 13 June 2022 |
| | | | | KR | 10-2022-0079427 | A | 13 June 2022 |
| | | | | KR | 10-2022-0079429 | A | 13 June 2022 |
| KR | 10-2017-0113366 | A | 12 October 2017 | | None | | |
| KR | 10-2020-0014299 | A | 10 February 2020 | CN | 110679018 | A | 10 January 2020 |
| | | | | CN | 110679018 | B | 23 May 2023 |
| | | | | JP | 2020-221664 | A1 | 02 April 2020 |
| | | | | JP | 7060776 | B2 | 27 April 2022 |
| | | | | US | 2020-0251732 | A1 | 06 August 2020 |
| | | | | WO | 2018-221664 | A1 | 06 December 2018 |
| JP | 2020-136114 | A | 31 August 2020 | JP | 7074697 | B2 | 24 May 2022 |

Form PCT/ISA/210 (patent family annex) (July 2022)